Europäisches Patentamt

European Patent Office

Office européen des brevets

(11) Numéro de publication: **0 116 486**
**B1**

(12) **FASCICULE DE BREVET EUROPEEN**

(45) Date de publication du fascicule du brevet: **09.01.91**

(21) Numéro de dépôt: **84400028.1**

(22) Date de dépôt: **06.01.84**

(51) Int. Cl.⁵: **G 05 D 23/19**, G 05 D 23/20, G 08 B 19/00

(54) Régulateur électronique de l'application de la puissance électrique à un dispositif de variation de température.

(30) Priorité: **07.01.83 CA 419062**

(43) Date de publication de la demande:
**22.08.84 Bulletin 84/34**

(45) Mention de la délivrance du brevet:
**09.01.91 Bulletin 91/02**

(84) Etats contractants désignés:
**AT BE CH DE FR GB IT LI LU NL SE**

(56) Documents cités:

| | |
|---|---|
| WO-A-82/02608 | FR-A-2 432 255 |
| CA-A-1 035 448 | FR-A-2 483 579 |
| CA-A-1 114 474 | FR-A-2 491 692 |
| CA-A-1 117 625 | US-A-2 873 368 |
| DE-A-2 855 227 | US-A-4 200 910 |
| FR-A-2 395 671 | US-A-4 284 126 |
| FR-A-2 427 025 | US-A-42 944 04 |

(73) Titulaire: **Bensoussan, David**
**5170 Hingston**
**Montréal Québec H3X 3R2 (CA)**
(73) Titulaire: **Tardio, Don**
**2562 rue Taillon, Apt. 4**
**Montreal Québec H1L 4S7 (CA)**

(72) Inventeur: **Bensoussan, David**
**5170 Hingston**
**Montréal Québec H3X 3R2 (CA)**
Inventeur: **Tardio, Don**
**2562 rue Taillon, Apt. 4**
**Montreal Québec H1L 4S7 (CA)**

(74) Mandataire: **Rodhain, Claude**
**Cabinet Claude Rodhain 30, rue la Boétie**
**F-75008 Paris (FR)**

Courier Press, Leamington Spa, England.

**Description**

La présente invention se rapporte à un système de commande automatique de l'installation de chauffage en milieu résidentiel. Un regulateur électronique permet de commander de façon automatique la température dans chaque pièce de la résidence selon que ladite pièce est occupée ou non et/ou éclairée ou non.

Les thermostats actuellement en usage en milieu résidentiel fonctionnent pour la plupart sur le principe de la dilatation thermique des métaux, comme par exemple le thermostat de Welker et al, le brevet U.S. 2.873.368. Ces thermostats, placés dans les différentes pièces de la résidence ont une sensibilité thermique limitée.

Certains systèmes de régulation thermique permettent de réduire la consommation d'énergie de chauffage en baissant la température durant certaines périodes de la journée lesquelles sont fixées au moyen d'une horloge mécanique ou électrique. C'est le cas, par exemple, pour les brevets canadiens de Carlson (741.463), Rudolph (1035448), Levine (1.114.474) et Wong (1117.625). Toutefois, ces systèmes n'offrent pas de flexibilité et nécessitent un réajustement chaque fois qu'il y a changement dans la régularité de l'occupation de la pièce ou de la résidence en question.

Une autre méthode de régulation thermique parfois suggérée est de baisser la température préétablie du thermostat avant que l'utilisateur ne quitte sa résidence et de rétablir la température nominale sitôt que l'utilisateur retourne à sa résidence. Une telle méthode permet en effet d'économiser en énergie de chauffage. Toutefois elle présente l'inconvénient de ne pas être automatique. De plus, l'usager hésite à employer cette méthode, car il préfère entrer dans sa résidence alors que celle-ci est déjà réchauffée à la température nominale.

On connait également, notamment par la demande P.C.T. publiée sous le No WO 82/02608, un régulateur électronique pour commander automatiquement l'application d'une puissance électrique à un dispositif électrique de variation et comprenant un capteur thermique générant un signal électrique dont une caractéristique varie en fonction de la température ambiante, une unité de mémoire programmable, des moyens d'adressage pour adresser ladite mémoire avec des températures présélectionnées, des moyens pour faire appel à l'information contenue dans ladite mémoire pour générer un signal électrique représentant une température choisie parmi les températures présélectionnées, des moyens pour recevoir et comparer le signal électrique correspondant à la température ambiante avec le signal électrique représentant la température présélectionnée choisie, et générer au moyen d'une unité de régulation un signal de régulation pour régler la durée d'application de la puissance du dispositif de variation de température en fonction de la différence de ces signaux électriques, au moins une unité de détection de mouvement, commandant les moyens d'adressage pour choisir l'une des températures présélectionnées et l'adresser à la mémoire, comprenant au moins un détecteur de mouvement capable de générer un signal électrique dont la caractéristique dépend de la présence ou de l'absence de mouvement au sein de son champ de détection et un détecteur de seuil associé à chaque détecteur de mouvement, la sortie du détecteur de seuil correspondant à un chiffre binaire indiquant la présence ou l'absence de mouvement au sein du champ de détection du détecteur de mouvement, chaque détecteur de seuil étant connecté aux moyens d'adressage de façon à adresser la mémoire avec la température choisie en fonction de son état binaire de sortie. Bien que cette installation comporte également au moins un détecteur de lumière comprenant au moins un capteur de lumière capable de générer un signal électrique dont les caractéristiques varient en fonction de la luminosité au sein de son champ de détection et un comparateur hystérésis associé audit capteur de lumière, la sortie du comparateur correspondant à un chiffre binaire indiquant la présence ou l'absence de luminosité au sein du champ de détection du capteur de lumière, ce détecteur de lumière sert uniquement à interrompre l'éclairage des pièces inoccupées lorsque cette opération n'a pas été effectuée lors du départ des occupants, et l'économie d'énergie ainsi réalisée est relativement minime.

Les inconvénients décrits plus haut peuvent être surmontés en utilisant un détecteur de température électronique et un régulateur de température électronique lesquels permettent une sensibilité thermique et une stabilité thermique accrues, assurant ainsi un meilleur confort à l'usager. De plus, un détecteur de mouvement et un détecteur de lumière sont disposés dans les différentes pièces de la résidence de façon à pouvoir économiser en énergie de chauffage lorsque lesdits détecteurs ne décèlent ni mouvement, ni lumière. De la sorte, la régulation thermique s'effectue de façon automatique sans qu'il y ait besoin d'ajuster la température durant toute la période d'utilisation du système de chauffage. Un micro ordinateur assure un ajustement et une stabilisation rapides aux nouvelles températures au moyen d'un contrôle de type proportionnel-intégral-différentiel, lequel détermine la puissance de chauffage moyenne des éléments chauffants de la pièce de la résidence. De la sorte, l'invention permet un système de commande de température hautement sensible, automatisé, rapidement stabilisé et présentant un avantage certain du point de vue de la consommation énergétique. Le micro ordinateur assure la régulation de la température aux valeurs préétablies au moyen d'un régulateur de type proportionnel-intégral-différentiel, lequel fournit des signaux de commande en fonction des températures préétablies et de la température ambiante de la pièce de la résidence, lesquels signaux commandent la puissance de chauffage moyenne des éléments chauffants de la pièce de la résidence.

Le problème à résoudre par la présente invention consiste à concevoir un régulateur électronique de température qui d'une part soit pourvu d'une meilleure stabilité et d'une meilleure sensibilité en température et soit conçu pour fonctionner à des régimes de températures préétablies tout en dépendant de la présence d'occupants et de la présence d'éclairage dans chacune des pièces de la résidence et qui d'autre part permettre de régulariser la température de façon automatique et d'économiser l'énergie de chauffage lorsque les pièces de la résidence sont inoccupées et/ou non éclairées.

La présente invention a pour objet un régulateur électronique pour commander l'application d'une puissance électrique à un dispositif électrique de variation de température, du type comprenant:

— un capteur thermique générant un signal électrique dont une caractéristique varie en fonction de la température ambiante,

— une unité de mémoire programmable,

— des moyens d'adressage pour adresser ladite mémoire avec des températures présélectionnées,

— des moyens pour faire appel à l'information contenue dans ladite mémoire pour générer un signal électrique représentant une température choisie parmi les températures présélectionnées,

— des moyens pour recevoir et comparer le signal électrique correspondant à la température ambiante avec le signal électrique représentant la température présélectionnée choisie, et générer au moyen d'une unité de régulation un signal de régulation pour régler la durée d'application de la puissance du dispositif de variation de température en fonction de la différence de ces signaux électriques,

— au moins une unité de détection de mouvement commandant lesdits moyens d'adressage pour choisir l'une desdites températures présélectionnées et l'adresser à la mémoire, comprenant au moins un détecteur de mouvement capable de générer un signal électrique dont la caractéristique dépend de la présence ou de l'absence de mouvement au sein de son champ de détection et un détecteur de seuil associé à chaque détecteur de mouvement, la sortie dudit détecteur de seuil correspondant à un chiffre binaire indiquant la présence ou l'absence de mouvement au sein du champ de détection dudit détecteur de mouvement, chaque détecteur de seuil étant connecté auxdits moyens d'adressage de façon à adresser la mémoire avec ladite température choisie en fonction de son état binaire de sortie, et

— au moins un détecteur de lumière comprenant au moins un capteur de lumière capable de générer un signal électrique dont les caractéristiques varient en fonction de la luminosité au sein de son champ de détection et un comparateur hystérésis associé audit capteur de lumière, la sortie dudit comparateur correspondant à un chiffre binaire indiquant la présence ou l'absence de luminosité au sein du champ de détection dudit capteur de lumière, régulateur caractérisé en ce que:

— les détecteur de seuil et comparateur hystérésis sont connectés auxdits moyens d'adressage de façon à adresser la mémoire avec une température choisie dans le programme de températures présélectionnées en fonction des états binaires de sortie des détecteurs de seuil et comparateur hystérésis respectivement associés auxdits détecteur de mouvement et capteur de lumière,

— lesdits moyens d'appel à l'information et de génération du signal électrique générant alors un signal électrique représentant ladite température choisie selon les états binaires de sortie des détecteur de seuil et comparateur hystérésis respectivement associés auxdits détecteurs de mouvement et capteur de lumière,

— de sorte que ladite durée d'application de la puissance dudit dispositif de variation de température est variée en fonction de l'état de mouvement et de l'état de luminosité détectés.

Un tel régulateur électronique peut également être utilisé comme thermomètre électronique, système d'alarme, détecteur de feu ou peut asservir un quelconque dispositif énergétique tel un système de ventilation, d'air climatisé, ou de réglage d'humidité lors d'un changement dans l'occupation de la pièce ou dans l'éclairage de la pièce.

Relativement aux dessins qui illustrent la réalisation de l'invention,

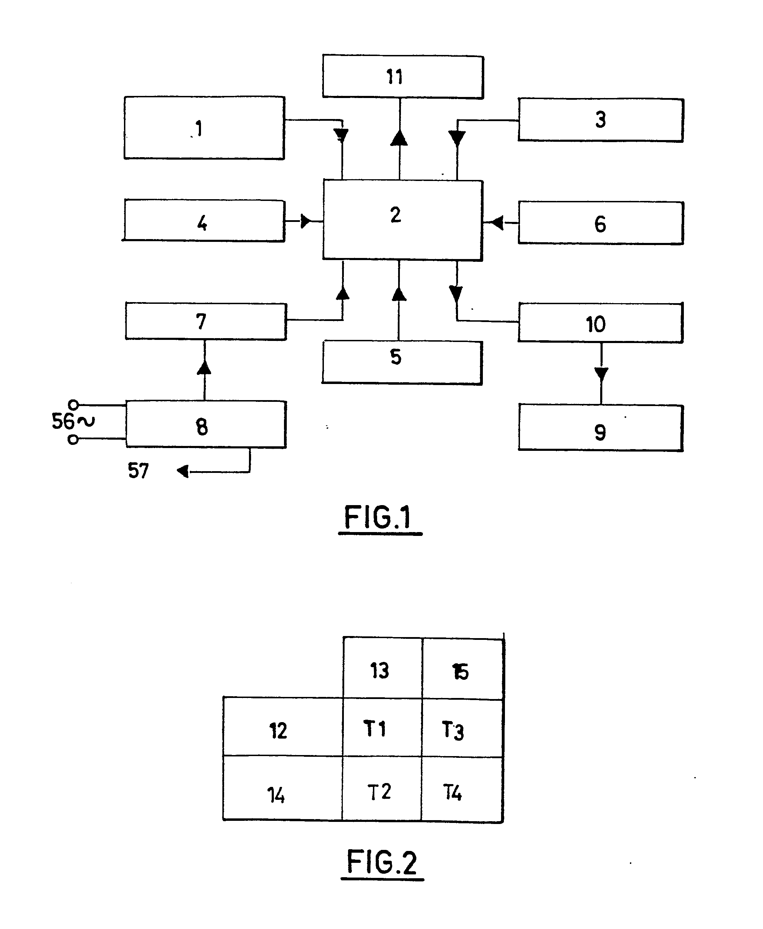

— La figure 1 représente le schéma fonctionnel de l'ensemble du régulateur automatique de température sensible au mouvement et à la lumière,

— La figure 2 représente les états du système correspondant aux diverses possibilités de présence ou d'absence de mouvement et d'éclairage,

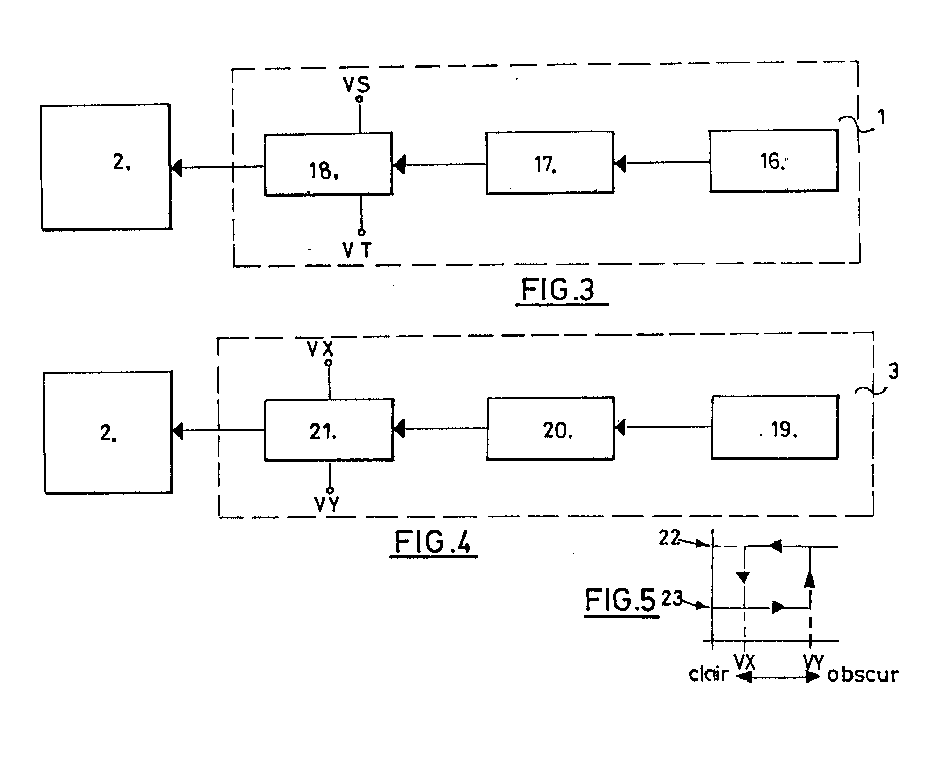

— La figure 3 illustre le schéma fonctionnel de l'unité détectrice de mouvement,

— La figure 4 représente le schéma fonctionnel de l'unité détectrice de lumière,

— La figure 5 représente la courbe du comparateur hystérisis associé à l'unité détectrice de lumière,

— La figure 6 représente le schéma fonctionnel de l'unité détectrice de température,

— La figure 7 représente le schéma fonctionnel du panneau de réglage,

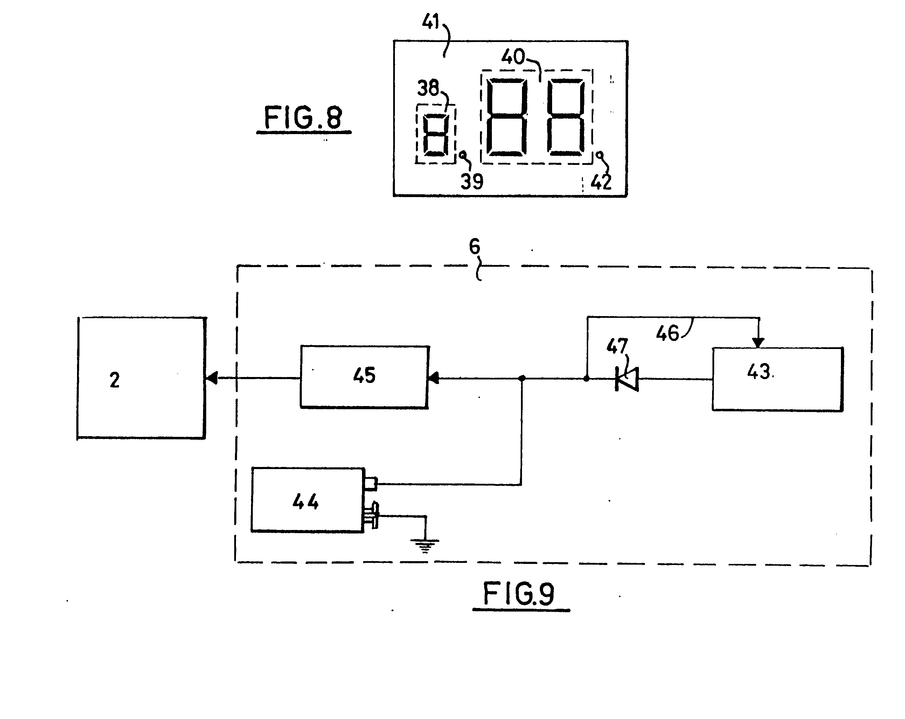

— La figure 8 illustre le tableau d'affichage,

— La figure 9 représente le schéma fonctionnel de l'unité d'alimentation de secours,

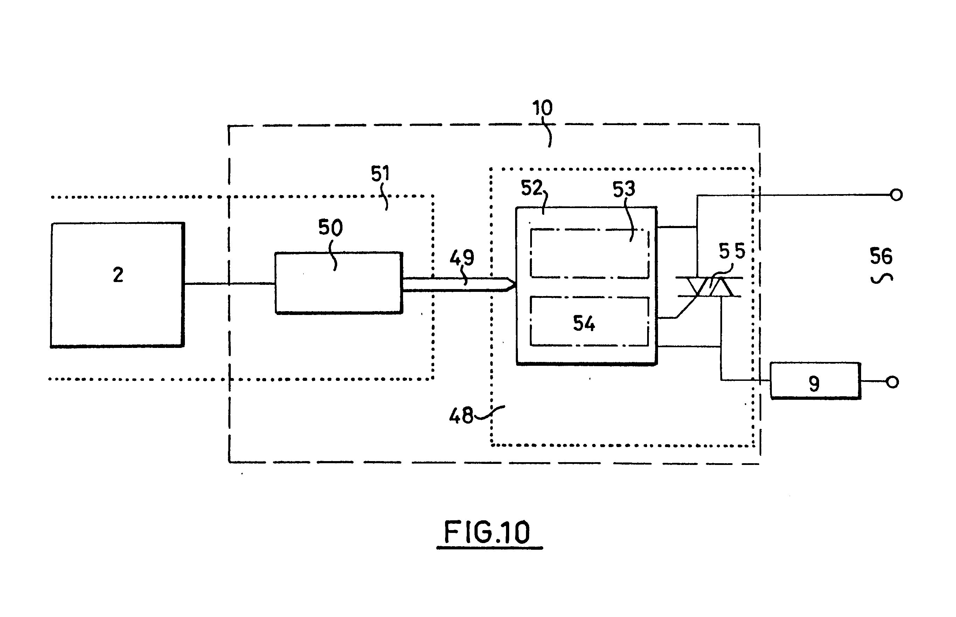

— La figure 10 représente le schéma fonctionnel de l'unité de contrôle de puissance du radiateur,

— La figure 11 illustre le principe d'opération de l'unite de traitement numérique.

L'invention sera mieux comprise à l'aide de la description qui suit, en référence aux schémas fonctionnels représentant, à titre d'exemples non limitatifs, quelques formes de réalisation du système de contrôle de température.

L'invention comprend les éléments fonctionnels suivants:

Une unité détectrice de mouvement 1 laquelle transmet à l'unité de traitement numérique 2 l'état d'occupation de la pièce.

Un détecteur de lumière 3 lequel transmet à ladite unité de traitement numérique 2 l'état d'éclairage de la pièce.

EP 0 116 486 B1

Un détecteur de température 4 lequel transmet à ladite unité de traitement numérique 2 la lecture de la température ambiante.

Quatre grandeurs de température présélectionnées et ajustables, correspondant aux température désirées selon l'état du système, lesquelles sont mises en mémoire dans l'unité de traitement numérique 2 à partir du panneau de contrôle 5. L'état du système représente l'une des quatre possibilités suivantes: présence de mouvement 12 dans la pièce et éclairage 13 de la pièce, T1, absence de mouvement 14 dans la pièce et élairage 13 de la pièce, T2, présence de mouvement 12 dans la pièce et obscurité 15 de la pièce, T3, et absence de mouvement 14 dans la pièce et obscurité 15 de la pièce, T4.

Une unité d'alimentation de secours 6 laquelle maintient les valeurs présélectionnées de température dans la mémoire de l'unité de traitement numérique 2 en cas de panne d'alimentation du secteur 56.

Une unité d'alimentation principale 8 laquelle permet d'obtenir les tensions régulées à partir de la source d'alimentation alternative du secteur 56 afin d'alimenter les amplificateurs et les circuits numériques utilisés ou d'autres types de circuit (vers toutes les unités 57).

Un détecteur de zéro 7 de l'alimentation du secteur 56 lequel permet de construire une base de temps à l'unité de traitement numérique 2, ladite base de temps servant à construire les différents compteurs utilisés au au sein de l'unité de traitement numérique 2.

Une unité de traitement numérique 2 laquelle délivre:

— un signal de contrôle aux radiateurs électriques 9 via une unité de contrôle de puissance 10.

— une lecture de la température ambiante et de l'état du système ainsi que les lectures des températures présélectionnées dans une unité d'affichage 11.

L'ensemble des éléments du système sont placés dans un premier module dit module "1", localisé sur un mur de la pièce, l'unité de contrôle de puissance de chauffage 10 des radiateurs 9 étant placée dans un second module dit module "2", situé à même la plaque de recouvrement du radiateur, et ce, afin que l'unité de contrôle de puissance 10 n'influence pas la lecture du détecteur de température. Le module "1" et le module "2" peuvent être combinés si toutefois l'unité de contrôle de puissance 10 est thermiquement isolée du capteur thermique du détecteur de température 4.

a) Le détecteur de mouvement 16 fonctionnant sur le principe de l'effet Doppler, sur le principe des variations du rapport d'ondes stationnaires des ondes émises par une antenne, sur le principe de la détection infrarouge, sur le principe des cellules photoélectriques, ou sur le principe de la mise en action d'un relais, et qui fournit à l'unité de traitement numérique 2 l'information binaire se rapportant à la présence ou l'absence de mouvement dans la pièce.

L'unité détectrice de mouvement 1 comprend un détecteur de mouvement 16 utilisant une source d'émission électromagnétique ou ultrasonique et doté d'une puissance d'émission ajustable. Le signal de sortie correspondant à la présence ou l'absence de mouvement dans la pièce de la résidence passe par un amplificateur 17 de gain ajustable et par un détecteur de seuils ajustables VS et VT, lesquels déterminent la sensibilité du système de détection, le détecteur de seuils 18 commandant une bascule dont l'état binaire de sortie représente l'état d'occupation de la pièce, ledit état binaire étant acheminé à l'unité de traitement numérique 2.

Il est également possible de détecter l'état binaire correspondant à l'état d'occupation de la pièce de la résidence au sein même de l'unité de traitement numérique, au cas où la tension de signal de sortie du détecteur de mouvement est convertie sous forme numérique de sorte que l'amplification, la détection de seuils et la fixation de l'état du système soient faits sous forme numérique, à l'extérieur ou à l'intérieur de l'unité de traitement numérique. L'amplification peut être une amplification numérique. Les niveaux numériques ajustables desdits seuils peuvent être déterminés par des potentiomètres dont les lectures de tension passent par un convertisseur analogique-numérique. Ils peuvent également être mis en mémoire au sein de l'unité de traitement numérique, un contrôle d'incrémentations numériques supplémentaires au panneau de contrôle pouvant faire varier lesdits niveaux numériques lesquels sont comparés au niveau numérique du signal de sortie de l'amplificateur au moyens de circuits logiques, afin de déterminer les transitions de l'état du système, lesquelles déclenchent une bascule dont les niveaux de sortie représentent l'état d'occupation de la pièce. Alternativement, des circuits comparateurs de séquences numériques correspondant à des échantillons successifs du signal de sortie du détecteur de mouvement, peuvent servir à détecter les transitions de l'état du système.

b) Un détecteur de lumière 3 comportant un capteur 19 (résistance photosensible ou phototransistor) dont la sensibilité est ajustable et dont le signal électrique de sortie qui dépend de l'état d'éclairage passe par un amplificateur de gain ajustable 20 et un comparateur hystérésis 21 avec deux tensions de référence ajustables VX et VY, de façon à éviter des oscillations dans le cas de situation de claire-obscur. La sortie du comparateur hystérésis 21 est acheminée vers l'unité de traitement numérique 2.

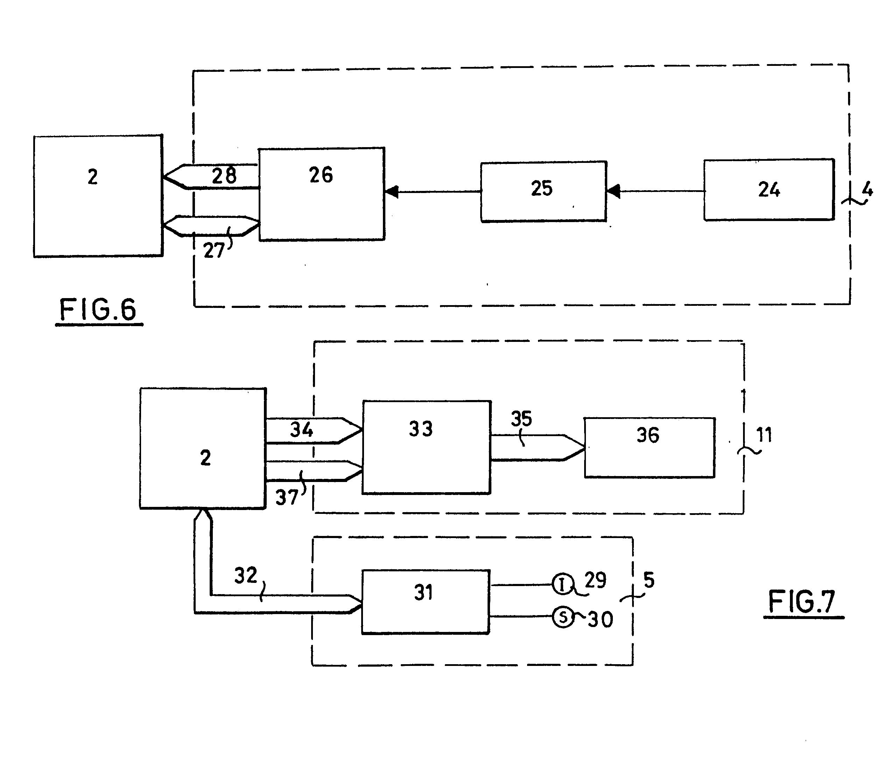

La figure 5 représente la courbe d'hystérésis du comparateur hystérésis, dont les seuils VX et VY déterminent les états binaires de sortie 22 et 23.

Il est également possible de brancher le signal de sortie du capteur de lumière 19 à l'unité de traitement numérique 2, laquelle déterminera l'état d'éclairage de la pièce, ainsi que les changements de l'état d'éclairage selon un principe d'opérations numériques tel que décrit dans le cas de la détermination numérique de l'état d'occupation de la pièce. Les tensions de référence VX et VY peuvent être éventuellement égales si toutefois la lecture de l'état d'éclairage ou les changements de points de consigne du contrôleur lequel délivre un signal de contrôle au dispositif de variation de température en fonction de la

4

température actuelle et des valeurs de températures présélectionnées en mémoire, se font à des intervalles espacés.

c) Un détecteur de température 4 lequel comprend un capteur thermique 24 (thermistor, dispositif à semi-conducteur ou autre) doté d'une sensibilité de x mV/°C et dont la sortie est connectée via une unité d'isolation à un amplificateur 25 de gain G dont la sortie alimente un convertisseur analogique numérique 26 lequel peut être incorporé dans l'unité de traitement numérique 2. Dans le cas où le convertisseur analogique-numérique 26 n'est pas incorporé à l'unité de traitement numérique 2, un signal de commande ou contrôle de cette dernière 27 synchronise la transmission de l'information numérique ou données 28 du convertisseur °analogique-numérique 26. Le gain ajustable G, ainsi que deux tensions de référence ajustables du convertisseur analogique-numérique 26, permettent de déterminer les températures minimales et maximales du contrôleur, ainsi que la sensibilité en température, soit Gx mV/°C, laquelle peut être traduite en un nombre approprié de bits/°C.

d) Le tableu de contrôle du système de contrôle de température 5 comprend deux touches de commande 29 et 30 lesquelles déterminent au sein d'un système de bascules 31 la sélection de l'état du système ainsi que l'incrémentation désirée, des signaux de contrôle 32 de l'unité de traitement numérique 2 permettant de lire séquentiellement ces deux informations.

Les informations prédéterminées de température correspondant aux états du système T1, T2, T3 et T4 peuvent être ajustées au moyen d'un potentiomètre ou être incrémentées de façon numérique avant d'être emmagasinées dans la mémoire d'une unité d'interface d'affichage 33. Celle-ci achemine les données 34 de sélection de l'état actuel du système et effectue des opérations de décodage et d'amplification pour alimenter les données d'affichage 35 au tableau d'affichage 36. Des signaux de contrôle 32 et 37 permettent l'affichage des températures présélectionnées et de l'état du système correspondant sur le tableau d'affichage 36.

e) Le tableau d'affichage 41 peut inclure par exemple des diodes luminescentes, ou un affichage à gaz ou préférablement à cristaux liquides. La sélection de l'état du système 38 et 39 et la température correspondante 40 apparaissent sur un tableau d'affichage 41 sous forme alphanumérique, les lettres ou les chiffres étant illuminés séquentiellement de façon à ce que la persistance rétinienne de l'usager permette un visionnement continu desdits lettres ou chiffres. Un indicateur supplémentaire 42 peut monter si l'affichage est celui de la température ambiante.

Un exemple de régulation simple du point de vue de l'usager consiste à faire en sorte que les lectures de température 40 soient incrémentées tant que l'usager maintient son doigt sur la touche d'incrémentation 29, et que la touche de commande de sélection 30 soit activée, tandis que les lectures de sélection de l'état du système 38 et 39 soient représentées à chaque nouvelle pression de la touche de commande de sélection 30 par l'usager. Cette dernière pourra commander l'affichage successif de 40, de 38, 39 et 40, de 38, 39, 40 et 42, de 42 ou encore aucun affichage.

Au cas où la touche de commande de sélection 30 reste actionnée indéfiniment, il est possible de pourvoir à un retour automatique à l'affichage de la température ambiante au bout d'un délai fixé à l'avance.

Au cas où la touche de commande d'incrémentation 29 est actionnée sans que la touche de commande de sélection 30 le soit, il est possible de pourvoir à l'affichage de température présélectionnée correspondant à l'état du système actuel.

Il est également possible de retarder légèrement l'affichage 38 et 39 lors des variations de T2 à T1, et de T4 à T3, afin de permettre à l'usager de vérifier le fonctionnement du détecteur de mouvement et du détecteur de lumière.

f) Une unité d'alimentation de secours 6 comprenant un chargeur automatique 43 d'une batterie 44, lesquels alimentent un second régulateur de secours 45, lequel sert à alimenter les circuits de mémoire de l'unité de traitement numérique 2. La batterie 44 est connectée au régulateur de secours 45 au cas où la source d'alimentation du secteur 56 est absente et que l'interrupteur principal du système de contrôle de température est actionné. Le chargeur automatique 43 agit de telle sorte que la batterie est chargée lorsque sa tension 46 baisse au-dessous d'un premier seuil et que la charge de la batterie cesse lorsque la tension de la batterie dépasse un second seuil. De plus, au cas où l'alimentation du secteur 56 est absente et que la tension de la batterie baisse au-dessous d'un seuil critique, un autre détecteur de seuil situé dans le régulateur de secours cesse l'alimentation des circuits de mémoire de l'unité de traitement numérique. Une protection supplémentaire consiste à empêcher la batterie de se décharger dans le chargeur automatique 46, au moyen d'une diode 47 par exemple.

g) Une unité de traitement numérique 2, laquelle peut être constituée d'unités logiques, de microprocesseurs, d'un microordinateur ou d'un miniordinateur, et qui compare régulièrement la température actuelle et la température désirée en vue d'effectuer une correction de type PID (proportionnel-intégral-différentiel) de l'écart entre ces températures. Le signal de sortie u(t) du régulateur PID est fonction du signal d'entrées e(t) comme suit:

$$u(t) = K \left[ e(t) + \frac{1}{T_I} \int e(t)dt + T_d \frac{de(t)}{dt} \right]$$

où les constantes K, $T_i$ et $T_d$ sont choisies de façon à optimiser la réponse du régulateur de température en termes de temps de montée, de dépassement, de temps de stabilisation et de régime permanent.

L'équation précédente est traduite sous forme numérique par une des méthodes d'analyse numérique. Par exemple, la sortie u(k) du régulateur PID pourra obéir à la loi de récurrence suivante:

$$u(k)-u(k-1)=Q_0 e(k)-Q_1 e(K-1)-Q_2 e(k-2)$$

où les constantes $Q_0$, $Q_1$, $Q_2$ sont reliées aux constantes K, $T_i$ et $T_d$ et la période d'échantillonnage $T_o$ du convertisseur analogique-numérique associé à l'unité de traitement numérique 2.

L'unité de traitement numérique 2 délivre un signal de commande lequel détermine le nombre de cycles par seconde durant lesquels le radiateur est en fonction. Ce nombre de cycles peut varier de 0% à 100% d'un certain nombre de cycles de la source d'alimentation principale. Le signal de commande de l'unité de traitement numérique peut être une série d'impulsions lesquelles peuvent être traitées pour former une série d'impulsions modulées analogiquement (modulation d'impulsions en hauteur, modulation d'impulsions en position ou modulation d'impulsions en durée), laquelle est transmise à l'unité de contrôle de puissance 10.

Dans le cas d'impulsions modulées en durée, l'impulsion modulée en durée passe par un amplificateur de courant 50 au sein du module "1" 51, puis est transmise électriquement à une unité 52 d'isolation 53—amplificateur suiveur 54, ou préférablement isolateur électro-optique- localisée dans l'unité de contrôle de puissance 10 au sein du module "2" 48 et alimente la gachette d'un commutateur de puissance tel un relais ou un commutateur de puissance à semiconducteur—triac 55, SCR, ou autre—branché, en série au radiateur 9, au secteur 56.

Dans le cas où l'unité de traitement numérique utilise des bases de temps dérivées à partir d'un oscillateur à cristal et non à partir d'un détecteur de zéro 7 du secteur 56, il est possible d'inclure un détecteur de zéro du secteur 56 dans l'unité de contrôle de puissance 10 au sein du module "2" 48. Les impulsions de sortie du détecteur de zéro serviront à déclencher un premier commutateur de puissance lequel est polarisé par l'impulsion modulée en durée provenant de l'unité de traitement numérique 2 et la sortie duquel sert à déclencher un second commutateur de puissance branché, en série au radiateur 9, au secteur 56. De la sorte, nous assurons que les temps de commutation du radiateur s'effectuent lors des détections de zéro du secteur 56, minimisant ainsi les possibilités de transitoires sur le secteur.

Des circuits d'interface supplémentaires sont éventuellement ajoutés afin de rendre l'unité de traitement numérique 2 compatible du point de vue des technologies transistors/CMOS à l'unité d'interface d'affichage 33, à l'unité détectrice de mouvement 1, au détecteur de lumière 3, au détecteur de température 4, au panneau de contrôle 5, au détecteur de zéro 7 et à l'unité de contrôle de puissance 10.

Un même commutateur de puissance peut actionner plusieurs radiateurs en parallèle; plusieurs radiateurs indépendants peuvent être actionnés par plusieurs commutateurs de puissance lesquels sont contrôlés par l'impulsion modulée en durée parvenant de l'unité de traitement numérique 2.

L'unité de traitement numérique 2 peut être un microordinateur possédant deux états de travail, l'état de traitement et l'état de présélection: en état de traitement, le système prélève l'information conçenant les différents détecteurs, et fait les calculs nécessaires pour contrôler le circuit de contrôle de puissance 10. Lorsque la touche de sélection d'état du système 30 est actionnée par l'usager, le microordinateur passe à l'état du système 30 est actionnée par l'usager, le microordinateur passe à l'état de présélection, état dans lequel les signaux acheminés au circuit de contrôle de puissance 10 sont creux qui préexistaient avant la mise en action des touches de commande de sélection 30 et d'incrémentation 29. Une fois que la touche de commande de sélection n'est plus actionnée, le microordinateur passe de l'état de préselection à l'état de traitement après un délai déterminé, suite à quoi l'ensemble des minuteries du microordinateur sont réinitialisées.

Le logiciel du microordinateur comprend deux routines principales. La première routine effectue les opérations suivantes: contrôle de l'unité de contrôle de puissanee 10, contrôle de l'unité détectrice de mouvement 1, contrôle du détecteur de lumière 3, contrôle du détecteur de température 4, demande d'affichage de nouvelles données, chacun desdits contrôles pouvant être échantillonné à des temps déterminés par des compteurs appropriés, et calcul des termes de l'équation du régulateur proportionnel-intégral-différentiel. La seconde routine effectue les opérations suivantes: initialisation des variables de travail, initialisation d'une valeur binaire test dans la mémoire du microordinateur afin de vérifier l'alimentation de secours 6 du microordinateur, contrôle de la touche d'incrémentation 29, contrôle de la touche de sélection 30 et initialisation d'un délai de temps pour l'affichage des transistions de l'état du système. Par mesure de sécurité, il est prévu qu'en cas de perte d'alimentation du secteur 56, les valeurs présélectionnées de température sont conservées dans une portion définie de la mémoire laquelle est alimentée par la batterie 44. De la sorte, le système peut reprendre les opérations de traitement. Toutefois, le système effectuera un contrôle d'une valeur test placée dans la mémoire du microordinateur afin de prévenir d'une perte des valeurs conservées, laquelle peut être occasionnée par une betterie défectueuse. Dans un tel cas, le système de contrôle de température s'ajustera sur une valeur déterminée de température indépendamment de l'état du système, et ce, jusqu'à remise à jour de la mémoire programmable. Ladite valeur déterminée de température peut servir à initialiser les compteurs du système lors de la mise en action du système de contrôle de température.

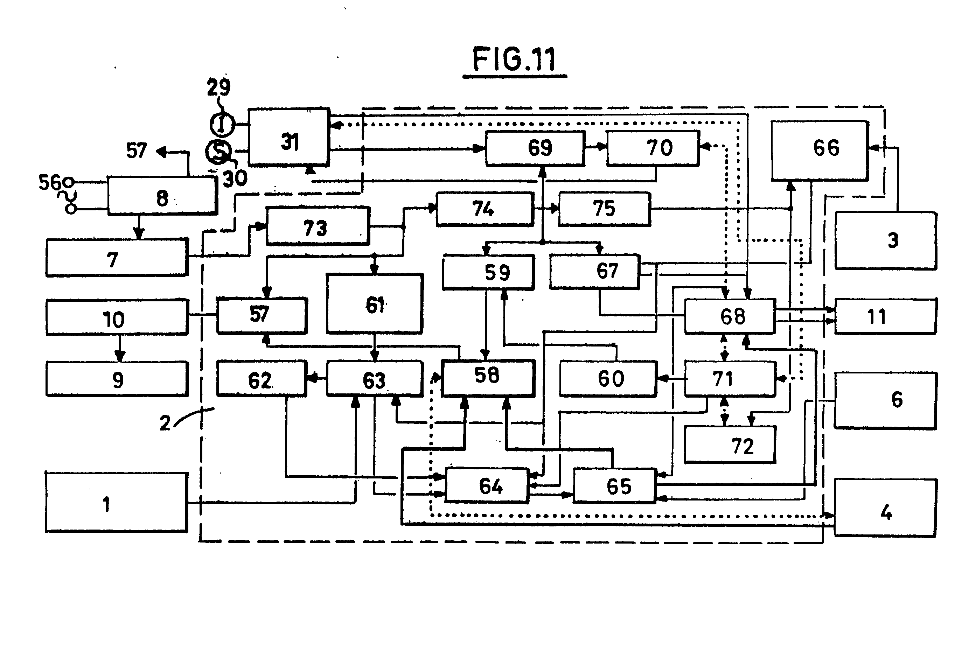

Dans ce qui suit, nous décrivons l'ensemble des compteurs utilisés au sein de l'unité de traitement numérique 2 du contrôleur électronique de température. L'interrelation de ces compteurs est décrite dans la figure 11 dans laquelle les lignes grasses sont celles des données, les lignes simples représentent des signaux de contrôle, et les lignes pointillées représentent des signaux de contrôle bidirectionnels.

Un compteur régulateur 59 décide des temps de calcul de l'unité de régulation 58 de type proportionnel, proportionnel-intégral ou proportionnel-intégral-différentiel. Ce compteur décide également des temps d'échantillonnage des valeurs de température ambiante au sein du convertisseur analogique-numérique associé au détecteur de température 4.

Un compteur puissance 57 lequel est décrémenté durant la durée de l'impulsion modulée en durée associée à la sortie du régulateur 58. $f_s$ étant la fréquence du secteur 56 et k une constante, le radiateur 9 sera actionné pour une durée de $kx/2f_s$ où x peut varier de 0 à $2f_s$. $kx/2f_s$ représentera le temps durant lequel le radiateur 9 est en marche et $k(1-x/2f_s)$ représentera le temps durant lequel le radiateur 9 est éteint. La commutation du radiateur 9 se fait par l'intermédiaire de l'unité de contrôle de puissance 10.

Le compteur régulateur 59 est subordonné à l'expiration du compteur attente 60 et ce, afin de permettre un calcul du régulateur sur de nouvelles valeurs présélectionnées lors du passage de l'état de présélection à l'état de traitement. Le compteur attente 60 est initialisé lorsque l'unité de traitement numérique passe de l'état de présélection à l'état de traitement. Lors du passage de l'état de traitement à l'état de présélection, le compteur puissance 57 continue de fonctionner à la valeur x qui existait à l'état de traitement et ce, jusqu'au nouveau calcul des valeurs de sortie du régulateur 58 qui suit la décrémentation complète du compteur attente 60.

Le compteur d'échantillonnage 61 de l'unité détectrice de mouvement 1 décide des temps de lecture successifs de l'état binaire associé à l'unité détectrice de mouvement 1.

Le compteur mouvement 62 est initialisé suite à une détection de mouvement au sein d'une unité de traitement de mouvement 63 associée au détecteur de mouvement 1. Cette unité detraitement de mouvement 63 associée à la détection de mouvement, permet de changer par le biais d'un registre pointeur 64, la température servant comme point de consigne au système, laquelle est localisée dans l'unité de mémoire vive 65. La valeur d'initialisation du compteur mouvement 62 dépend de l'état binaire associé au détecteur de lumière 3. L'information de l'état binaire associé au détecteur de lumière 3, parvient via l'unité de traitement de mouvement 63 et le compteur d'échantillonnage lumière 66.

Le point de consigne correspondant à l'état du système $T_1$, est maintenu pendant une durée Y, laquelle commence à être mesurée lors de l'arrêt de la détection de mouvement dans la pièce. Le point de consigne correspondant à l'état du système $T_3$ est maintenu pendant une durée Z, laquelle commence à être mesurée lors de l'arrêt de la détection de mouvement dans la pièce. De la sorte, nous assurons qu'une pièce reste chauffée à une température désirée quand bien même une personne s'absenterait de ladite pièce pendant une durée inférieur à Y ou Z.

Le compteur d'échantillonnage de lumière 66 décide des intervalles séparant les lectures successives de l'état binaire associé au détecteur de lumière 3, lesquelles lectures sont transmises au registre pointeur 64 lequel décide laquelle parmi les valeurs de température présélectionnées en mémoire 65, sert de point de consigne au régulateur 58.

Le compteur d'affichage 67 détermine à quel moment les données des circuits d'affichage sont mises à jour. Lorsque l'unité de traitement numérique est à l'état de traitement, l'affichage est renouvelé toutes les Q secondes. Lors d'un changement de l'état du système, l'affichage est modifié après un délai de R secondes afin de permettre à l'usager d'observer sur le tableau d'affichage les changements de l'état du système, alors que le registre pointeur 64 est mis à jour instantanément.

Lorsque la touche de commande d'incrémentation 29 est actionnée alors que l'unité de traitement numérique est à l'état de traitement, la température servant comme point de consigne actuel est affichée pour une durée S. La touche de commande d'incrémentation 29 amorce par le biais du système de bascules 31, de l'unité detraitement d'affichage 68, et de l'unité détraitement de sélection 71, l'extraction de la température prédéterminée servant comme point de consigne au régulateur 58, ladite température étant extraite de l'unité de mémoire vive 65 via le registre pointeur 64 avant d'être acheminée à l'unité d'affichage 11.

En état de présélection, toute action de la touche d'incrémentation 29 amorce une bascule 31 laquelle initialise un compteur en anneau d'incrémentation 69 qui, une fois décrémenté, permettra d'actionner l'unité d'incrémentation 70. Le compteur d'incrémentation 69 est réinitialisé tant que l'usager exerce une pression sur la touche d'incrémentation 29. L'unité de traitement de l'incrémentation 70 remet à jour la mémoire 65 et, par ailleurs, remet à jour l'unité d'affichage 11 par le baisis de l'unité de traitement d'affichage 68.

Lors du passage de l'état de présélection à l'état de traitement, la touche de commande de sélection 30 amorce la bascule 31, laquelle initialise le compteur attente 60, et par ailleurs transmet par le biais de l'unité de traitement d'affichage 68 les nouvelles données de température ambiante à l'unité d'affichage 11. Lors du passage de l'état de présélection, la touche de commande de sélection 30 amorce la bascule 31 laquelle fait appel aux valeurs présélectionnées de température emmagasinées dans la mémoire 65 par le biais de l'unité de traitement de sélection 71, de l'unité de traitement d'affichage 68, de l'unité de traitement de sélection 71 et du registre pointeur 64.

Par ailleurs, un monostable 72 est actionné chaque fois que la touche de commande de sélection 30 ou d'incrémentation 29 est actionnée. A la fin de l'impulsion de sortie du monostable, l'unité de traitement numérique retourne à l'état de traitement. Et ce, afin d'éviter que le système ne reste pas à l'état de présélection continuellement au cas où l'usager oublie de ramener l'unité de traitement numérique à l'état de traitement.

L'alimentation de secours 6 assure la conversation des valeurs de température présélectionnées en mémoire 65 dans le cas d'une panne de secteur 56.

Un exemple de choix de bases de temps possibles suit: une unité debase de temps $B_1$ 73, laquelle peut être déterminée à même la source d'alimentation alternative du secteur 56 au moyen d'un détecteur de Zéro 7 de ladite alimentation de secteur. Cette base de temps peut être par exemple $1/2f_s$ où $f_s$ représente la fréquence du secteur 56. Une seconde base de temps d'une seconde 74 (compteur seconde) et d'une minute 75 (compteur minute) peuvent être déduites à partir de la base de temps $B_1$ 73.

Par exemple, on pourra associer les compteurs suivants à la base de temps $B_1$: compteur d'échantillonnage 61 de l'unité détectrice de mouvement et compteur puissance 57. La base de temps d'une seconde sera utilisée par les compteurs suivants: compteur d'affichage 67, compteur régulateur 59, compteur d'incrémentation 69. La base de temps d'une minute sera utilisée par les compteurs suivants: compteurs d'échantillonnage 66 du détecteur de lumière, compteur mouvement 62 et compteur attente 60.

La durée desdits compteurs peut être fixée à l'avance dans une mémoire morte ou encore être ajustée au moyen de potentiomètres dont le niveau de tension de sortie est traduit de façon numérique au moyen d'un convertisseur de type analogique-numérique.

h) Il est également possible de limiter le système de régulation de température à une dépendance du mouvement dans la pièce seulement ou à une dépendance de la clarté de la pièce seulement ou non une dépendance du mouvement et de la clarté de la pièce. Dans un tel cas, il y aurait seulement deux états de système T1 et T2 ou T1 et T3. Les étapes de conception et de réalisation du système de régulation jusqu'ici décrites s'appliquent à un système de régulation de température dépendant de la présence de mouvement seulement ou de la présence de lumière seulement. A la différence près que la touche de commande de sélection 30 se limite à deux sélections principales et que, dans le cas d'une dépendance de la présence de mouvement seulement, le compteur mouvement 62 ne dépend plus de l'état d'éclairage de la pièce. Il est donc possible de réaliser deux autres systèmes indépendants ou encore d'obtenir une dépendance en fonction de la présence de mouvement seulement ou une dépendance en fonction de la présence d'éclairage seulement au moyen d'un choix judicieux de valeurs de température présélectionnées correspondant aux différents états du système T1, T2, T3 et T4. Par exemple, en fixant T1=T3 et T2=T4, le système de régulation de température ne dépend plus que de la présence de mouvement dans la pièce. En fixant T1=T2 et T3=T4, le système de régulation de température ne dépend plus que de la présence d'éclairage dans la pièce.

Il est également possible d'amorcer ou de désamorcer des systèmes d'air conditionné lors des transitions de l'état du système; un détecteur des transitions de l'état du système localisé au sein de l'unité de traitement numérique sert à amorcer, désamorcer, voire asservir un circuit de contrôle de puissance du système de ventilation. Par exemple, si les détecteurs de transition sont reliés électriquement au relais d'un système d'alarme, ledit système sera actionné lors des transitions de T2 ou T4 à T1 ou T3. Un autre exemple serait l'asservissement d'un humidificateur lors de la détection d'une transition de T4 à T3. Il est possible également d'utiliser le contrôleur de température comme détecteur de feu. Pour cela, il suffit de vérifier si la température ambiante dépasse un seuil élevé déterminé au delà d'un délai d'un temps déterminé.

Il est également possible d'économiser le nombres de modules "1" 51 existant au sein de la résidence en connectant un certain nombre de modules "2" 48 de plusieurs radiateurs localisés dans différentes pièces, à un même module "1" 51. Il est également possible d'asservir plusieurs modules "1" à un nombre moindre de radiateurs, voire même pourvoir à une température uniforme au sein de la résidence en fonction des états du système dans différentes sections de la résidence. Il est également possible de contrôler le chauffage de la chaudière d'un système de chauffage central selon que le(s) détecteur(s) de mouvement et/ou de lumière décèle(nt) la présence de mouvement et/ou de lumière dans la résidence.

Il est également possible de faire un choix entre plusieurs états d'opération du système, chaque état d'opération comportant des valeurs présélectionnées mémorisables, pour que l'usager puisse utiliser son système dans des cas particuliers tel par exemple celui de chambres de grandes dimensions. De la sorte, le système offrira en plus de l'option d'état d'opération normal, une ou plusieurs options supplémentaires au choix de l'usager.

Quoique, dans la divulgation de ce brevet, nous illustrions un régulateur de température d'un système de chauffage faisant usage de radiateurs, la méthode décrite s'applique à un système de chauffage marche-arrêt, le régulateur modifiant les points de consigne du système de chauffage en fonction de la présence de mouvement et/ou de lumière, et utilisant une régulation de type proportionnel seulement. En dehors des applications du système de contrôle de température en milieu résidentiel, ce système de contrôle peut trouver certaines applications en milieu commercial et industriel.

Le système ici décrit peut servir à commander un système de chauffage central de type marche-arrêt moyennant l'installation de détecteurs de mouvement et de lumière à des endroits clés. Il peut également servir à régler la température dans chaque pièce par le biais du contrôle du moteur actionnant les vannes de canalisation d'eau chaude ou d'air chaud. Il peut également servir à actionner au moyen d'un simple

# EP 0 116 486 B1

relais le système de ventilation ou d'air conditionné dans la pièce donnée, l'appellation marche-arrêt pouvant se référer tant à un système de chauffage central qu'à un système d'air conditionné; des corrections standard du réglage d'humidité selon la température peuvent être incorporés au système afin d'ajuster l'humidité dans une résidence selon la température ambiante.

## Revendications

1. Régulateur électronique pour commander l'application d'une puissance électrique à un dispositif électrique de variation de température (9), du type comprenant:
— un capteur thermique (24) générant un signal électrique dont une caractéristique varie en fonction de la température ambiante;
— une unité de mémoire programmable (65);
— des moyens d'adressage pour adresser ladite mémoire (65) avec des températures présélectionnées;
— des moyens pour faire appel à l'information contenue dans ladite mémoire (65) pour générer un signal électrique représentant une température choisie parmi les températures présélectionnées;
— des moyens (58) pour recevoir et comparer le signal électrique correspondant à la température ambiante avec le signal électrique représentant la température présélectionnée choisie, et générer au moyen d'une unité de régulation (10) un signal de régulation pour régler la durée d'application de la puissance du dispositif de variation de température (9) en fonction de la différence de ces signaux électriques;
— au moins une unité de détection de mouvement (1), commandant lesdits moyens d'adressage pour choisir l'une desdites températures présélectionnées et l'adresser à la mémoire (65), comprenant au moins un détecteur de mouvement (16) capable de générer un signal électrique dont la caractéristique dépend de la présence (12) ou de l'absence (14) de mouvement au sein de son champ de détection et un détecteur de seuil (18) associé à chaque détecteur de mouvement (16), la sortie dudit détecteur de seuil (18) correspondant à un chiffre binaire indiquant la présence (12) ou l'absence (14) de mouvement au sein du champ de détection dudit détecteur de mouvement (16), chaque détecteur de seuil (18) étant connecté auxdits moyens d'adressage de façon à adresser la mémoire (65) avec ladite température choisie en fonction de son état binaire de sortie; et
— au moins un détecteur de lumière (3) comprenant au moins un capteur de lumière (19) capable de générer un signal électrique dont les caractéristiques varient en fonction de la luminosité au sein de son champ de détection et un comparateur hystérésis (21) associé audit capteur de lumière (19), la sortie dudit comparateur (21) correspondant à un chiffre binaire indiquant la présence (13) ou l'absence (15) de luminosité au sein du champ de détection dudit capteur de lumière (19);
régulateur caractérisé en ce que:
— les détecteur de seuil (18) et comparateur hystérésis (21) sont connectés auxdits moyens d'adressage de façon à adresser la mémoire (65) avec une température choisie sans le programme de températures présélectionnées en fonction des états binaires de sortie des détecteurs de seuil et comparateur hystérésis respectivement associés auxdits détecteur de mouvement et capteur de lumière;
— lesdits moyens d'appel à l'information et de génération du signal électrique générant alors un signal électrique représentant ladite température choisie selon les états binaires de sortie des détecteur de seuil et comparateur hystérésis respectivement associés auxdits détecteur de mouvement (16) et capteur de lumière (19);
— de sorte que ladite durée d'application de la puissance dudit dispositif de variation de température (9) est variée en fonction de l'état de mouvement et de l'état de luminosité détectés.

2. Régulateur électronique selon la revendication 1, caractérisé en ce que le début ou la fin de ladite impulsion modulée en durée est synchronisé au détecteur de zéro (7) de l'alimentation principale (8) connectée audit dispositif de variation de température (9).

3. Régulateur électronique selon l'une des revendications 1 et 2, caractérisé en ce que le dispositif de variation de température (9) est un dispositif de type marche-arrêt.

4. Régulateur électronique selon l'une des revendications 1 à 3, caractérisé en ce que l'unité (58) de contrôle du dispositif de variation de température (9) en fonction de la différence des signaux électriques représentant la température ambiante et la température présélectionnée en mémoire (65) est un régulateur de type proportionnel.

5. Régulateur électronique selon l'une des revendications 1 à 3, caractérisé en ce que l'unité (58) de contrôle du dispositif de variation de température (9) en fonction de la différence des signaux électriques représentant la température ambiante et la température présélectionnée en mémoire (65), est un régulateur de type proportionnel-intégral.

6. Régulateur électronique selon l'une des revendications 1 à 3, caractérisé en ce que l'unité (58) de contrôle du dispositif de variation de la température (9) en fonction de la différence des signaux électriques représentant la température ambiante et la température présélectionnée en mémoire (65), est un régulateur de type proportionnel-intégral-différentiel.

7. Régulateur électronique selon l'une des revendications 1 à 6, caractérisé en ce que l'unité (58) de contrôle du dispositif de variation de la température (9) en fonction de la différence des signaux électriques représentant la température ambiante et la température présélectionnée en mémoire (65), est numérique.

8. Régulateur électronique selon l'une des revendications 1 à 7, caractérisé en ce que le régulateur utilisé (58) fait partie d'un microordinateur.

9. Régulateur électronique selon l'une des revendications 1 à 8, caractérisé en ce qu'il comporte une unité d'affichage (11) et des moyens pour fournir à cette unité d'affichage (11) les signaux électriques correspondant à la température ambiante (4) ou les signaux électriques représentant les chiffres binaires associés au détecteur de mouvement (1) et/ou les chiffres binaires associés au détecteur de lumière (3) ou les signaux électriques correspondant aux températures présélectionnées en mémoire (65) ou une combinaison desdits signaux.

10. Régulateur électronique selon l'une des revendications 1 à 9, caractérisé en ce qu'il comporte une batterie (44) laquelle sert d'alimentation de secours pour les unités de mémoire (65) et à laquelle est connecté un chargeur (43) branché à l'alimentation principale (8).

11. Régulateur électronique selon l'une des revendications 1 à 10, caractérisé en ce qu'il commande plus d'un dispositif de variation de température (9).

12. Régulateur électronique selon l'une des revendications 1 à 10, caractérisé en ce que plusieurs contrôleurs électroniques sont associés au même dispositif de variation de température (9).

13. Régulateur électronique selon l'une des revendications 1 à 11, caractérisé en ce que plusieurs groupes de températures présélectionnées peuvent être programmées en mémoire (65) et en ce qu'il comprend des moyens de faire appel à un groupe particulier de valeurs de températures présélectionnées.

14. Régulateur électronique selon l'une des revendications 1 à 13, caractérisé en ce qu'il comprend des moyens pour déclencher un signal d'alarme audit contrôleur lors de la détection de mouvement par un détecteur de mouvement (1).

15. Régulateur électronique selon l'une des revendications 1 à 13, caractérisé en ce qu'il comprend des moyens pour déclencher un signal d'alarme lorsque la température ambiante dépasse un seuil déterminé durant un temps déterminé.

16. Régulateur électronique selon l'une des revendications 1 à 15, caractérisé en ce que le dispositif de variation de température (9) est un système de ventilation.

17. Régulateur électronique selon l'une des revendications 1 à 15, caractérisé en ce que le dispositif de variation de température (9) est un système d'air conditionné.

18. Régulateur électronique selon l'une des revendications 1 à 15, caractérisé en ce qu'il comprend des moyens pour asservir des dispositifs de régulation d'humidité lors d'un changement des valeurs binaires associées à l'unité de détection de mouvement (1) et/ou au détecteur de lumière (3).

19. Régulateur électronique selon l'une des revendications 1 à 15, caractérisé en ce que le dispositif de variation de température (9) est un système combiné de chauffage et d'air conditionné.

20. Régulateur électronique selon l'une des revendications 1 à 19, caractérisé en ce que le programme de températures présélectionnées comprend une température indépendante de l'état de fonctionnement du contrôleur et en ce que ledit contrôleur comprend des moyens pour s'ajuster à cette température indépendante dans certaines circonstances.

21. Régulateur électronique selon l'une des revendications 1 à 20, caractérisé en ce que la température présélectionnée correspondant à un état de fonctionnement particulier est maintenue pour une période de temps déterminée après que ledit état d'opération a été sélectionné.

**Patentansprüche**

1. Elektronischer Regler für die Zuführung von elektrischer Leistung zu einer Vorrichtung (9) zur Temperaturänderung mit:

— einem Wärmefühler (24), der ein elektrisches Signal ausgibt, dessen eine Charakteristik sich in Abhängigkeit von der Umgebungstemperatur verändert;

— einer programmierbaren Speichereinheit (65);

— Mitteln zum Laden dieses Speichers (65) mit vorgegebenen Temperaturen;

— Mitteln zum Aufruf der in diesem Speicher (65) abgelegten Informationen, um ein elektrisches Signal zu generieren, das einer der vorgegebenen Temperaturen entspricht;

— Mitteln (58) zum Empfang des der Umgebungstemperatur entsprechenden elektrischen Signales, um es mit dem der gewählten vorgegebenen Temperatur entsprechenden elektrischen Signal zu vergleichen, und zur Generierung eines Stellsignales mit Hilfe einer Regeleinrichtung (10), um die Dauer der Zuführung der Leistung zu der Vorrichtung (9) in Abhängigkeit von dem Unterschied dieser elektrischen Signale zu beeinflussen;

— zumindest einer Bewegungsdetektoreinheit (1) zur Betätigung der genannten Lademittel, um eine der vorgegebenen Temperaturen auszuwählen und in den Speicher (65) zu laden, mit mindestens einem Bewegungsdetektor (16), der ein elektrisches Signal ausgeben kann, dessen Charakteristik von der Anwesenheit (12) oder Abwesenheit (14) einer Bewegung innerhalb seines Messbereiches abhängt, und mit einem Schwellendetektor (18), der jedem Bewegungsdetektor (16) zugeordnet ist, wobei der Ausgang dieses Schwellendetektors (18) einer Binärzahl entspricht, die die Anwesenheit (12) oder Abwesenheit (14) einer Bewegung innerhalb des Messbereiches dieses Bewegungsdetektors (16) anzeigt, und jeder Schwellendetektor (18) mit den Lademitteln verbunden ist, sodass der Speicher (65) mit der Temperatur beaufschlagt wird, die in Abhängigkeit von ihrem binären Ausgangszustand gewählt wurde; und

— mindestens einem Lichtdetektor (3) mit mindestens einer Lichtsonde (19), die ein elektrisches Signal ausgeben kann, dessen Charakteristika in Abhängigkeit von der Helligkeit in ihrem Messbereich varriieren, und einem Hysteresegerät (21), das der Lichtsonde (19) zugeordnet ist, wobei der Ausgang dieses Gerätes (21) einer Binärzahl entspricht, die die Anwesenheit (13) oder Abwesenheit (15) von Helligkeit im Messbereich der Lichtsonde (19) anzeigt;

Regler, der dadurch gekennzeichnet ist, dass:

— der Schwellendetektor (18) und das Hysteresegerät (21) mit den Lademitteln so verbunden sind, dass in den Speicher (65) eine Temperatur geladen wird, die dem Programm der in Abhängigkeit der binären Ausgangszustände des Schwellendetektors und Hystersegerätes vorgegebenen Temperaturen entnommen wurde, wobei der Schwellendetektor und das Hysteresegerät dem Bewegungsdetektor bzw. der Lichtsonde zugeordnet sind;

— die besagten Mittel zum Informationsaufruf und zur Generierung des elektrischen Signales ein elektrisches Signal entsprechend der Temperatur ausgeben, die nach den binären Ausgangszuständen des Schwellendetektors und Hysteresegerätes ausgewählt wurde, die jeweils dem Bewegungsdetektor (16) und der Lichtsonde (19) zugeordnet sind;

— die Dauer der Zuführung von Leistung für die Vorrichtung (9) in Abhängigkeit der festgestellten Bewegungs- und Helligkeitszustände geändert wird.

2. Elektronischer Regler entsprechend Anspruch 1, dadurch gekennzeichnet, dass der Anfang oder das Ende der genannten hinsichtlich ihrer Dauer modulierten Impulsion mit dem Nulldetektor (7) des Hauptanschlusses (8) synchronisiert ist, der mit der Vorrichtung (9) verbunden ist.

3. Elektronischer Regler entsprechend Anspruch 1 oder 2, dadurch gekennzeichnet, dass die Vorrichtung (9) eine Zweipunktvorrichtung ist.

4. Elektronischer Regler entsprechend einem der Ansprüche 1 bis 3, dadurch gekennzeichnet, dass die Kontrolleinheit (58) der Vorrichtung (9) zur Änderung der Temperatur in Abhängigkeit von der Differenz zwischen den elektrischen Signalen der Umgebungstemperatur und der gespeicherten vorgegebenen Temperatur ein Proportionalregler ist.

5. Elektronischer Regler entsprechend einem der Ansprüche 1 bis 3, dadurch gekennzeichnet, dass die Kontrolleinheit (58) der Vorrichtung (9) zur Änderung der Temperatur in Abhängigkeit von der Differenz zwischen den elektrischen Signalen der Umgebungstemperatur und der gespeicherten vorgegebenen Temperaturen ein PI-Regler ist.

6. Elektronischer Regler entsprechend einem der Ansprüche 1 bis 3, dadurch gekennzeichnet, dass die Kontrolleinheit (58) der Vorrichtung (9) zur Änderung der Temperatur in Abhängigkeit von der Differenz zwischen den elektrischen Signalen der Umgebungstemperatur und der gespeicherten vorgegebenen Temperaturen ein PID-Regler ist.

7. Elektronischer Regler entsprechend einem der Ansprüche 1 bis 6, dadurch gekennzeichnet, dass die Kontrolleinheit (58) der Vorrichtung (9) zur Änderung der Temperatur in Abhängigkeit von der Differenz zwischen den elektrischen Signalen der Umgebungstemperatur und der gespeicherten vorgegebenen Temperaturen ein numerischer Regler ist.

8. Elektronischer Regler entsprechend einem der Ansprüche 1 bis 7, dadurch gekennzeichnet, dass der verwendete Regler (58) Teil eines Mikrokomputers ist.

9. Elektronischer Regler entsprechend einem der Ansprüche 1 bis 8, dadurch gekennzeichnet, dass er eine Anzeigeeinheit (11) umfasst und Mittel, um diese Anzeigeeinheit (11) mit den elektrischen Signalen zu beaufschlagen, die der Umgebungstemperatur (4) entsprechen oder die die Binärzahlen darstellen, die dem Bewegungsdetektor (1) zugeordnet sind und/oder die Binärzahlen, die dem Lichtdetektor (3) zugeordnet sind, oder mit den elektrischen Signalen, die den im Speicher (65) vorgegebenen Temperaturen entsprechen, oder mit einer Kombination dieser Signale.

10. Elektronischer Regler entsprechend einem der Ansprüche 1 bis 9, dadurch gekennzeichnet, dass er mit einer Batterie (44) versehen ist, die zur Versorgung des Speichers (65) in Notfällen dient und mit einem Ladegerät (43) verbunden ist, das mit dem Hauptanschluss (8) verbunden ist.

11. Elektronischer Regler entsprechend einem der Ansprüche 1 bis 10, dadurch gekennzeichnet, dass er mehr als eine Vorrichtung (9) zur Temperaturänderung regelt.

12. Elektronischer Regler entsprechend einem der Ansprüche 1 bis 10, dadurch gekennzeichnet, dass mehrere elektronische Regler ein- und derselben Vorrichtung (9) zugeordnet sind.

13. Elektronischer Regler entsprechend einem der Ansprüche 1 bis 11, dadurch gekennzeichnet, dass mehrere Gruppen vorgegebener Temperaturen im Speicher (65) programmiert sein können, und dass er über Mittel verfügt, die die Auswahl einer bestimmten Temperaturgruppe ermöglichen.

14. Elektronischer Regler entsprechend einem der Ansprüche 1 bis 13, dadurch gekennzeichnet, dass er Mittel zur Auslösung eines Alarmes bei Feststellung einer Bewegung durch einen Bewegungsdetektor (1) hat.

15. Elektronischer Regler entsprechend einem der Ansprüche 1 bis 13, dadurch gekennzeichnet, dass er Mittel zur Auslösung eines Alarmes hat, wenn die Umgebungstemperatur während einer bestimmten Zeit einen vorgegebenen Wert überschreitet.

16. Elektronischer Regler entsprechend einem der Ansprüche 1 bis 15, dadurch gekennzeichnet, dass die Vorrichtung (9) zur Temperaturänderung ein Ventilatorsystem ist.

17. Elektronischer Regler entsprechend einem der Ansprüche 1 bis 15, dadurch gekennzeichnet, dass die Vorrichtung (9) eine Klimaanlage ist.

18. Elektronischer Regler entsprechend einem der Ansprüche 1 bis 15, dadurch gekennzeichnet, dass er über Mittel zur Steuerung von Feuchtigkeitsregelvorrichtungen bei Änderung der Binärwerte verfügt, die dem Bewegungsdetektor (1) und/oder dem Lichtdetektor (3) zugeordnet sind.

19. Elektronischer Regler entsprechend einem der Ansprüche 1 bis 15, dadurch gekennzeichnet, dass die Vorrichtung (9) eine kombinierte Heizungs-Klimaanlage ist.

20. Elektronischer Regler entsprechend einem der Ansprüche 1 bis 19, dadurch gekennzeichnet, dass das Programm vorgegebener Temperaturen eine Temperatur umfasst, die unabhängig vom Reglerbetrieb ist, und dass der Regler über Mittel zur Anpassung an diese unabhängige Temperatur unter bestimmten Umständen verfügt.

21. Elektronischer Regler entsprechend einem der Ansprüche 1 bis 20, dadurch gekennzeichnet, dass die vorgegebene, einem besonderen Betriebszustand entsprechende Temperatur während einer bestimmten Zeit beibehalten wird, nachdem dieser Betriebszustand ausgewählt worden ist.

## Claims

1. Electronic controller for controlling the application of electric power to an electric temperature variation device (9), of the type comprising:
— a thermal sensor (24) for generating an electrical signal having one characteristic varying according to the ambient temperature;
— a programmable memory unit (65);
— addressing means for addressing said memory (65) with preselected temperatures;
— means for calling the information stored in the memory (65) and generating an electrical signal representative of a chosen temperature amongst the preselected temperatures;
— means (58) for receiving and comparing the electrical signal corresponding to the ambient temperature with the electrical signal representative of the chosen, preselected temperature, and for generating through a regulator unit (10), a control signal in order to control the duration of power application to the temperature variation device (9) as a function of the difference between said electrical signals;
— at least one motion detector unit (1) controlling said addressing means for choosing one of said preselected temperatures and addressing it to the memory (65), comprising at least one motion detector (16) capable of generating an electrical signal whose characteristic depends on the presence (12) or absence (14) of motion in its detection field and a threshold detector (18) associated with each motion detector (16), the output of said threshold detector (18) corresponding to a binary number indicative of the presence (12) or absence (14) of motion in the detection field of said motion detector; each threshold detector (18) being connected to said addressing means so as to address the memory (65) with said chosen temperature as a function of the binary state of its output; and
— at least one light detector (3) comprising at least one light sensor (19) capable of generating an electrical signal whose characteristics vary according to the luminosity in its detection field, and a hysteresis comparator (21) associated with said light sensor (19), the output of said comparator (21) corresponding to a binary number indicative the presence (13) or absence (15) of luminosity in the detection field of said light sensor (19), said controller being characterized in that:
— said threshold detector (18) and hysteresis comparator (21) are connected to said addressing means so as to address the memory (65) with a temperature chosen in the programm of preselected temperatures as a function of the binary states of the outputs of the threshold detector and hysterisis comparator associated to said motion detector and light sensor, respectively;
— said means for calling the information and generating an electrical signal, then generating an electrical signal representative of said temperature chosen as a function of the binary states of the outputs of the threshold detector and hysterisis comparator associated to said motion detector and light sensor, respectively;
— whereby said duration of power application to said temperature variation device (9) is varied as a function of the state of motion and state of luminosity that are detected.

2. Electronic controller according to claim 1, characterized in that the beginning or end of said power application whose duration is modulated, is synchronized to the zero detector (7) of the main power supply (8) connected to said temperature variation device (9).

3. Electronic controller according to anyone of claims 1 to 2, characterized in that the temperature variation device (9) is a device of the on-off type.

4. Electronic controller according to anyone of claims 1 to 3, characterized in that the unit (5) for controlling the temperature variation device (9) as a function of the difference between the electrical signals representative of the ambient temperature and the preselected temperature in the memory (65) is a regulator of the proportional type.

5. Electronic controller according to anyone of claims 1 to 3, characterized in that the unit (5) for controlling the temperature variation device (9) as a function of the difference between the electrical signals representative of the ambient temperature and the preselected temperature in the memory (65) is a regulator of the proportional-integral type.

6. Electronic controller according to anyone of claims 1 to 3, characterized in that the unit (5) for controlling the temperature variation device (9) as a function of the difference between the electrical signals representative of the ambient temperature and the preselected temperature in the memory (65) is a regulator of the proportional-integral-differential type.

7. Electronic controller according to anyone of claims 1 to 3, characterized in that the unit (5) for controlling the temperature variation device (9) as a function of the difference between the electrical signals representative of the ambient temperature and the preselected temperature in the memory (65), is digital.

8. Electronic controller according to anyone of claims 1 to 7, characterized in that the regulator unit (58) that is used is part of a microprocessor.

9. Electronic controller according to anyone of claims 1 to 8, characterized in that it comprises a display unit (11) and means to provide said display unit (11) with the electrical signals corresponding to said ambient temperature (4) or the electrical signals representative of said binary numbers associated to the motion detector (1) and/or said binary numbers associated to the light detector (3) or the electrical signals corresponding to the preselected temperatures in memory (65) or a combination of said signals.

10. Electronic controller according to anyone of claims 1 to 9, characterized in that it comprises a battery (44) acting as a standby power supply for the memory unit (65) and to which a charger (43) connected to the main power supply (8) is connected.

11. Electronic controller according to anyone of claims 1 to 10, characterized in that it controls more than one temperature variation device (9).

12. Electronic controller according to anyone of claims 1 to 10, characterized in that several electronic controllers are connected to the same temperature variation device (9).

13. Electronic controller according to anyone of claims 1 to 11, characterized in that several sets of preselected temperatures are storable in the memory unit (65) and in that it comprises means for calling a particular set of preselected temperatures.

14. Electronic controller according to anyone of claims 1 to 13, characterized in that it comprises means for triggering an alarm signal within said controller whenever motion is detected by a motion detector (1).

15. Electronic controller according to anyone of claims 1 to 13, characterized in that it comprises means for triggering an alarm system whenever the ambient temperature exceeds a predetermined threshold value during a predetermined period.

16. Electronic controller according to anyone of claims 1 to 15, characterized in that the temperature variation device (9) is a ventilating system.

17. Electronic controller according to anyone of claims 1 to 15, characterized in that the temperature variation device is an airconditioning system.

18. Electronic controller according to anyone of claims 1 to 15, characterized in that it comprises means for activating a humidity regulation device whenever there is a change in the binary numbers associated to the motion detector unit (1) and/or the light detector (3).

19. Electronic controller according to anyone of claims 1 to 15, characterized in that the temperature variation device is a combined heating and air-conditioning system.

20. Electronic controller according to anyone of claims 1 to 19, characterized in that the program of preselected temperatures includes a fixed temperature independent of the state of operation of the controller and wherein the controller comprises means for adjusting it to said fixed temperature under certain circumstances.

21. Electronic controller according to anyone of claims 1 to 20, characterized in that the preselected temperatures corresponding to a particular state of operation is maintained for a given period of time after said state of operation has been selected.

## FIG.1

## FIG.2

FIG.3

FIG.4

FIG.5

FIG.6

FIG.7

FIG.8

41

40

38

39

42

6

2

45

46

47

43

44

FIG.9

EP 0 116 486 B1

FIG.10

FIG.11